# EUROPEAN PATENT APPLICATION

(11) **EP 4 390 815 A1**
(43) Date of publication of application: **26.06.2024**
(21) Application number: 22857506.4
(22) Date of filing: 21.07.2022
(51) Int. Cl.: G06Q 20/06, G06Q 20/38, G06Q 40/04

(54) **SMART CONTRACT EXECUTION METHOD AND APPARATUS**

(30) Priority: 19.08.2021 CN 202110956783
(71) Applicant: Digital Currency Institute, The People's Bank of China, Beijing 100071 (CN)
(72) Inventor: MU, Changchun, Beijing 100071 (CN); DI, Gang, Beijing 100071 (CN); QIAN, Youcai, Beijing 100071 (CN); DU, Jinzhao, Beijing 100071 (CN)
(74) Representative: Casalonga
(86) International application number: PCT/CN2022/106964
(87) International publication number: WO 2023/020193

(57) **Abstract**

A method and apparatus for executing smart contract, relating to the technical field of digital currencies. The method comprises: in response to an execution request of smart contract, calling an application layer contract to execute service logic processing, and constructing fund layer contract parameters required for executing a fund layer contract (S101); and according to the service logic and the fund layer contract parameters, calling the fund layer contract by the application layer contract to execute fund processing (S102). The method can separate application logic processing and fund processing in a business scenario, and contract responsibility is clear, and logic processing is simple; in addition, by calling between smart contracts, complex contracts are implemented by combining simple contracts, and thus the method is adapted to more business application scenarios.

## Description

### Cross-Reference to Related Application

The present disclosure claims the priority of Chinese Patent Application No. 202110956783.0 filed on August 19, 2021 and entitled "Method and Apparatus for Executing Smart Contract ", the disclosure of which is incorporated herein by reference in its entirety as a part of the present disclosure.

### Technical Field

The present disclosure relates to the technical field of digital currencies, and in particular, to a method and apparatus for executing smart contract.

### Background

A contract refers to agreement and commitments reached between transaction participants. A smart contract is a set of commitments specified in a digital form, comprising an agreement of how both parties fulfill the commitment. The smart contract is generally considered as a computer agreement that aims to propagate, validate, or execute a contract in an informatization manner. With the popularization of digital currencies, the smart contract is also applied to more service scenarios, and processing logic of the smart contract becomes more and more complicated and diversified. Then, how to uniformly manage and execute smart contracts with complicated and diversified processing logics is a technical problem to be urgently solved at present.

### Summary

In view of this, embodiments of the present disclosure provide a method and apparatus for executing smart contract, which can separate application logic processing and fund processing in a business scenario, and achieves clear contract responsibility and simple logic processing; in addition, by calling between smart contracts, complex contracts are implemented by combining simple contracts, and thus the present disclosure is adapted to more business application scenarios.

In order to achieve the object, according to one aspect of embodiments of the present disclosure, a method for executing a smart contract is provided.

The method for executing a smart contract comprises: in response to an execution request of smart contract, calling an application layer contract to execute service logic processing, and constructing fund contract parameters required for executing a fund layer contract; and according to the service logic and the fund contract parameters, calling the fund layer contract by the application layer contract to execute fund processing.

In some embodiments of the present disclosure, the method further comprises: when the fund layer contract relates to a fund operation, the fund operation is completed by the fund layer contract calling an interface of a digital currency system.

In some embodiments of the present disclosure, the application layer contract and the fund layer contract are stored and managed by a contract management library.

In some embodiments of the present disclosure, the contract management library comprises a first contract management library and a second contract management library, wherein the first contract management library is used for managing the fund layer contract, and reviewing and managing and controlling the application layer contract; and the second contract management library is used for managing the application layer contract.

In some embodiments of the present disclosure, after the application layer contract passes reviewing by the second contract management library, the application layer contract is uploaded and registered to the first contract management library; and after the fund layer contract passes reviewing by the first contract management library, the fund layer contract is deployed in a unified manner.

In some embodiments of the present disclosure, when the application layer contract does not pass reviewing by the first contract management library, the application layer contract is set to be in a management and control state, so that the application layer contract cannot execute a subscription operation any more and cannot continue to be executed.

In some embodiments of the present disclosure, the first contract management library is configured with a contract management and control interface, so as to review and manage and control the application layer contract by the contract management and control interface.

According to another aspect of embodiments of the present disclosure, an apparatus for executing a smart contract is provided.

The apparatus for executing smart contract comprises: an application contract execution component, configured to call, in response to an execution request of smart contract, an application layer contract to execute service logic processing, and construct fund contract parameters required for executing a fund layer contract; and a fund contract execution component, configured to call, according to the service logic and the fund contract parameters, the fund layer contract by the application layer contract to execute fund processing.

In some embodiments of the present disclosure, the apparatus further comprises: a fund operation processing component, configured to complete, when the fund layer contract relates to a fund operation, the fund operation by the fund layer contract calling an interface of a digital currency system.

In some embodiments of the present disclosure, the application layer contract and the fund layer contract are stored and managed by a contract management library.

In some embodiments of the present disclosure, the contract management library comprises a first contract management library and a second contract management library, wherein the first contract management library is used for managing the fund layer contract, and reviewing and managing and controlling the application layer contract; and the second contract management library is used for managing the application layer contract.

In some embodiments of the present disclosure, after the application layer contract passes reviewing by the second contract management library, the application layer contract is uploaded and registered to the first contract management library; and after the fund layer contract passes reviewing by the first contract management library, the fund layer contract is deployed in a unified manner.

In some embodiments of the present disclosure, when the application layer contract does not pass reviewing by the first contract management library, the application layer contract is set to be in a management and control state, so that the application layer contract cannot execute a subscription operation any more and cannot continue to be executed.

In some embodiments of the present disclosure, the first contract management library is configured with a contract management and control interface, so as to review and manage and control the application layer contract by the contract management and control interface.

According to yet another aspect of embodiments of the present disclosure, an electronic device for executing a smart contract is provided.

The electronic device for executing a smart contract comprises: one or more processors; and a storage apparatus, for storing one or more programs, wherein when the one or more programs are executed by the one or more processors, the one or more processors implement the method for executing a smart contract provided in embodiments of the present disclosure.

According to still another aspect of embodiments of the present disclosure, a computer-readable medium is provided.

The computer-readable medium, on which a computer program is stored, wherein when the program is executed by a processor, the method for executing a smart contract provided in embodiments of the present disclosure is implemented.

Some embodiments in the present disclosure above have the following advantages or beneficial effects: by the technical solution of in response to an execution request of smart contract, calling an application layer contract to execute service logic processing, and constructing fund contract parameters required for executing a fund layer contract; and according to the service logic and the fund contract parameters, calling the fund layer contract by the application layer contract to execute fund processing, when a smart contract needs to be executed, an application layer contract is firstly called to execute service logic processing, and then a fund layer contract is called by the application layer contract to execute fund processing, so that application logic processing and fund processing in a business scenario can be separated, and contract responsibility is clear, and logic processing is simple; in addition, by calling between smart contracts, complex contracts are implemented by combining simple contracts, and thus the present disclosure is adapted to more business application scenarios. Moreover, fund processing is performed by the fund layer contract, so that transactions of different business application scenarios can be supported, and the coverage range of a fund processing logic is enlarged; and regardless of the difference in business logics of various business application scenarios, consistent fund processing logic can be maintained.

Further effects of the non-conventional optional modes will be described hereinafter in conjunction with specific embodiments.

### Brief Description of the Drawings

The accompanying drawings are used to better understand the present disclosure, and do not constitute inappropriate limitations to the present disclosure, in which:
Fig. 1 is a schematic diagram of main steps of a method for executing a smart contract according to embodiments of the present disclosure;
Fig. 2 is a schematic diagram of an implementation principle of contract management libraries according to some embodiments of the present disclosure;
Fig. 3 is a schematic diagram of an implementation principle of a smart contract according to some embodiments of the present disclosure;
Fig. 4 is a schematic diagram of main components of an apparatus for executing a smart contract according to embodiments of the present disclosure;
Fig. 5 is an exemplary system architecture diagram to which embodiments of the present disclosure can be applied; and
Fig. 6 is a schematic structural diagram of a computer system suitable for implementing a terminal device or a server of embodiments of the present disclosure.

### Detailed Description of the Embodiments

Hereinafter, exemplary embodiments of the present disclosure are illustrated with reference to the accompanying drawings, in which various details of the embodiments of the present disclosure are included to facilitate understanding, and they shall be considered as merely exemplary. Accordingly, a person of ordinary skill in the art would recognize that various changes and modifications to the embodiments described herein can be made without departing from the scope and spirit of the present disclosure. Also, for clarity and conciseness, illustrations of well-known functions and structures are omitted in the following description.

In order to solve the technical problem existing in the related art, the present disclosure provides a method for executing a smart contract. The smart contract (also simply referred to as: contract) is categorized according to processing responsibility, and is categorized into a fund layer smart contract and an application layer smart contract, which are simply referred to as a fund layer contract and an application layer contract. And the storage and management of the fund layer contract and the application layer contract is performed by means of a contract management library.

The fund layer contract is a contract portion that provides digital currency-based fund processing services for a smart contract, such as a prepayment contract, a sub-account contract, etc. The fund layer contract is reviewed and signed by a central agency, and then provided to various operating agencies for uniform deployment. The central agency is responsible for reviewing the business or technology qualification of an operation platform of the application layer contract, providing a digital currency technical service capability, and reviewing a smart contract thereof, so as to ensure that the smart contract complies with regulatory compliance requirements, and the central agency has a management and control capability for application layer contracts that have been brought online. A contract centralized storage library and a global data storage library are provided for the operating agency, so as to facilitate analysis and statistics of fund data; and the operating agency provides a digital currency technology service capability, constructs and manages an operation platform of the application layer contract, reviews developed smart contracts to ensure that the smart contracts comply with regulatory compliance requirements, and provides a verification service for execution of the smart contracts. Comprehensive and real-time fund data is provided for a regulatory agency, thereby facilitating fund management and control.

The application layer contract is used for adapting to processing logics of commercial applications, and for constructing various parameters required in the execution process of the fund layer contract. After the application layer contract is developed, a contract code is generated, and is submitted to a second contract management library to which the operating agency belongs to complete operations such as reviewing, verifying, unified compiling and signing. In addition to being reviewed and managed by the second contract management library, the application layer contract also requires registering in a first contract management library to which the central agency belongs. The contract management library is divided into the first contract management library and the second contract management library, and is a warehouse for storing the application layer contract and the fund layer contract, and has functions such as contract uploading, contract decompressing, contract reviewing, contract signature verification, contract verifying, contract packing, contract source code and executor downloading.

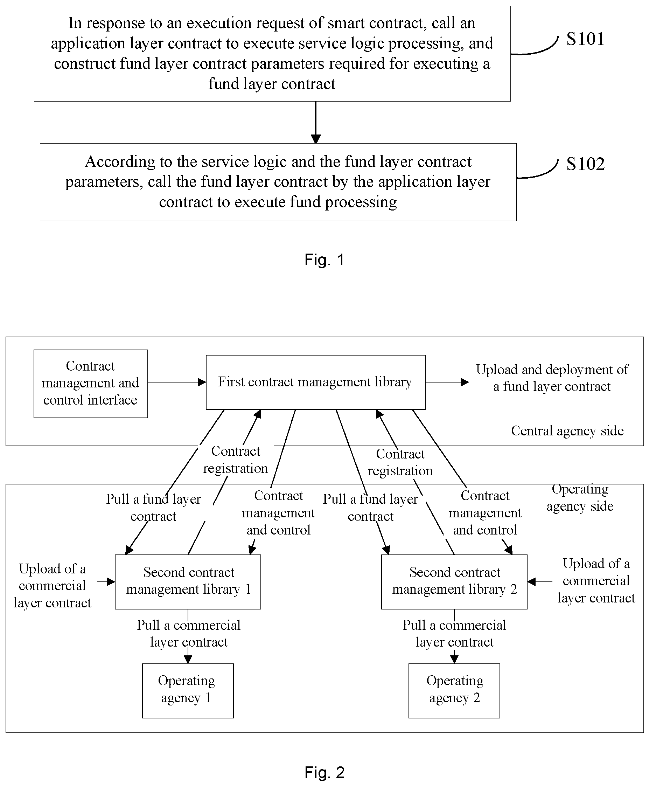

Fig. 1 is a schematic diagram of main steps of a method for executing a smart contract according to embodiments of the present disclosure. As shown in Fig. 1, the method for executing a smart contract of embodiments of the present disclosure mainly comprises the following steps S101 and S102.
Step S101: in response to an execution request of smart contract, calling an application layer contract to execute service logic processing, and constructing fund contract parameters required for executing a fund layer contract; and
step S102: according to the service logic and the fund contract parameters, calling the fund layer contract by the application layer contract to execute fund processing.

According to the embodiments of the present disclosure, when a smart contract needs to be executed, an application layer contract is firstly called to execute service logic processing, and then a fund layer contract is called by the application layer contract to execute fund processing, so that application logic processing and fund processing in a business scenario can be separated, and contract responsibility is clear, and logic processing is simple; in addition, by calling between smart contracts, complex contracts are implemented by combining simple contracts, and thus the present disclosure is adapted to more business application scenarios. Moreover, fund processing is performed by the fund layer contract, so that transactions of different business application scenarios can be supported, and the coverage range of a fund processing logic is enlarged; and regardless of the difference in business logics of various business application scenarios, consistent fund processing logic can be maintained.

According to the embodiments of the present disclosure, the smart contract is categorized into an application layer contract and a fund layer contract according to the processing responsibility of the smart contract. The application layer contract is used for adapting to processing logics of commercial applications, and for constructing various parameters required in the execution process of the fund layer contract. The fund layer contract is a contract portion that provides digital currency-based fund processing services for a smart contract, such as a prepayment contract, a sub-account contract, etc. Further, the application layer contract and the fund layer contract are stored and managed by a contract management library. The contract management library comprises a first contract management library and a second contract management library, wherein the first contract management library is used for managing the fund layer contract, and reviewing and managing and controlling the application layer contract; and the second contract management library is used for managing the application layer contract. The first contract management library is deployed and managed by, for example, a central agency, and the second contract management library is deployed and managed by, for example, an operating agency. In this way, the smart contract can be categorized according to the processing responsibility of the smart contract, so that application logic processing and fund processing in a business scenario can be separated, and contract responsibility is clear, and logic processing is simple; in addition, by calling between smart contracts, complex contracts are implemented by combining simple contracts, and thus the present disclosure is adapted to more business application scenarios. The fund layer contract is organized, developed and managed by an operating agency; the fund layer contract is managed, released and uniformly deployed by a central agency, and the operating agency and the central agency perform their own functions, so that the execution of the contract is simpler and faster.

Fig. 2 is a schematic diagram of an implementation principle of contract management libraries according to some embodiments of the present disclosure. As shown in Fig. 2, in embodiments of the present disclosure, the contract management library has a two-layer structure, comprising a first contract management library and a second contract management library, wherein the first contract management library is deployed and managed by a central agency side, and the second contract management library is deployed and managed by an operating agency side. Functions of the contract management library mainly comprise contract uploading, contract decompressing, contract reviewing, contract signature verification, contract verifying, contract packing, contract source code and executor downloading, etc. Functions of the contract management library may be used to complete registration of the whole set of smart contracts.

The first contract management library is deployed and managed by the central agency side, and is a warehouse for storing fund layer contracts, and there is only one first contract management library; and the second contract management library is deployed and managed by an operating agency, and is a warehouse for storing application layer contracts, and there may be a plurality of second contract management libraries, but there is only one second contract management library regarding each operating agency.

The fund layer contract is a smart contract provided by the central agency for fund processing, and the fund layer contract is reviewed and signed by the central agency in the first contract management library, and then provided to various operating agencies for uniform deployment. The application layer contract may be a smart contract automatically developed by a merchant on the basis of his/her own service logic; and after the application layer contract is developed, a contract code is generated, and is uploaded to a second contract management library to which the operating agency belongs to complete operations such as reviewing, verifying, unified compiling and signing. In addition to being reviewed and managed by the second contract management library, the application layer contract also requires registering in the first contract management library to which the central agency belongs, so that the first contract management library performs unified management and control on the application layer contract. After the application layer contract passes reviewing by the second contract management library, the application layer contract is automatically uploaded and registered to the first contract management library. Application layer contracts passing the reviewing of each operating agency all need to be uploaded and stored in the first contract management library, and therefore the first contract management library collectively stores application layer contracts passing the reviewing of all the operating agencies.

The first contract management library provides an upload page of fund layer contracts for deploying the fund layer contracts. Moreover, a contract management and control interface is further configured, so that the central agency reviews and manages and controls the application layer contract by the contract management and control interface. After reviewing the application layer contract uploaded by the operating agency, the central agency manages and controls the application layer contract of the operating agency. If the application layer contract is illegal, in-compliant, or does not comply with technical specifications, the central agency may set the application layer contract as an illegal contract by the contract management and control interface, and set the contract state as a management and control state. If a certain application layer contract is set to be in a management and control state, the first contract management library will automatically transfer a management and control instruction to the second contract management library of a corresponding operating agency, and the second contract management library sets the specified application layer contract to be in a management and control state, so that the application layer contract cannot execute a new subscription operation any more, and cannot continue to be executed, i.e. a subsequent operation cannot be continued even though the application layer contract has been subscribed.

According to some embodiments of the present disclosure, when the fund layer contract relates to a fund operation, the fund operation is completed by the fund layer contract calling an interface of a digital currency system.

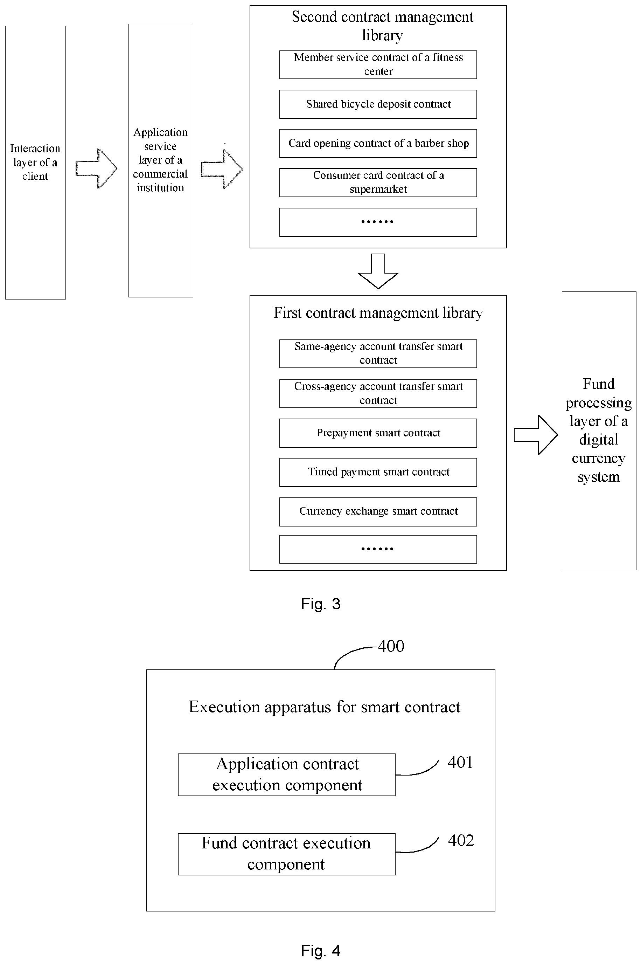

Fig. 3 is a schematic diagram of an implementation principle of a smart contract according to some embodiments of the present disclosure. As shown in Fig. 3, in embodiments of the present disclosure, execution of a smart contract is hierarchical, and one smart contract may be called by another smart contract, for example, an application layer contract calls another application layer contract or fund layer contract. By calling the fund layer contract, the application layer contract performs digital currency-related fund processing required by service logic. When a user interacts with an application service layer of a business institution via an interaction layer of a client to trigger an execution request of smart contract, an application server layer of a commercial institution calls an application layer contract saved in the second contract management library (e.g. a member service contract of a fitness center, a card opening contract of a barber shop, and a consumer card contract of a supermarket, and so on), to execute service logic processing, and to construct fund contract parameters required for execution of the fund layer contract. Then fund processing is executed by the application layer contract calling the fund layer contract (e.g., an account transfer smart contract, a prepayment smart contract, a timed payment smart contract, a currency exchange smart contract, etc.). If execution of the fund layer contract involves a fund operation, a fund processing interface of the digital currency system is called by the fund layer contract, to complete fund processing by the fund processing layer of the digital currency system.

According to the technical solution of the present disclosure, classifying the smart contract into an application layer contract and a fund layer contract can expand the coverage range of the fund processing logic; the fund processing is processed in a unified smart contract. No matter how different service processing logics of various commercial systems are, the processing in the fund layer will follow a unified fund processing logic. Under the support of the fund layer contract of the first contract management library, the relationship between fund settlement and liquidation becomes clear, simple and direct, and the fund processing is highly automated and linked, so that timely account of the fund can be achieved. The first contract management library reviews and manages and controls a smart contract of the second contract management library, which can ensure the legality and compliance of the smart contract before a service is put into production; during execution of the smart contract, an in-process review may also be performed according to service data transferred to the first contract management library; after a transaction ends, post-hoc tracing and checking can also be performed according to data reserved in the first contract management library and second contract management library, thereby further enhancing the regulatory capability of fund circulation. By storing fund transaction data in the first contract management library, the operating agency cannot modify the fund transaction data, thereby improving the credibility of the fund transaction data. Moreover, the fund transaction data recorded in the first contract management library can be used for constructing a user and merchant risk control mechanism, and thus has the capability of converting a transaction under a smart contract into a negotiable digital asset.

Fig. 4 is a schematic diagram of main components of an apparatus for executing a smart contract according to embodiments of the present disclosure. As shown in Fig. 4, the apparatus for executing a smart contract 400 according to the embodiments of the present disclosure mainly comprises an application contract execution component 401 and a fund contract execution component 402.

The application contract execution component 401 is configured to call, in response to an execution request of smart contract, an application layer contract to execute service logic processing, and construct fund contract parameters required for executing a fund layer contract; and
the fund contract execution component 402 is configured to call, according to the service logic and the fund contract parameters, the fund layer contract by the application layer contract to execute fund processing.

According to some embodiments of the present disclosure, the apparatus for executing a smart contract 400 can further comprise: a contract categorization component (not shown in the figure), configured to categorize the smart contract into an application layer contract and a fund layer contract according to the processing responsibility of the smart contract.

According to some other embodiments of the present disclosure, the apparatus for executing a smart contract 400 can further comprise a fund operation processing component (not shown in the figure), configured to complete, when the fund layer contract relates to a fund operation, the fund operation by the fund layer contract calling an interface of a digital currency system.

According to still some other embodiments of the present disclosure, the application layer contract and the fund layer contract are stored and managed by a contract management library. The contract management library comprises a first contract management library and a second contract management library, wherein the first contract management library is used for managing the fund layer contract, and reviewing and managing and controlling the application layer contract; and the second contract management library is used for managing the application layer contract.

According to still some other embodiments of the present disclosure, after the application layer contract passes reviewing by the second contract management library, the application layer contract is uploaded and registered to the first contract management library; and after the fund layer contract passes reviewing by the first contract management library, the fund layer contract is deployed in a unified manner.

According to still some other embodiments of the present disclosure, when the application layer contract does not pass reviewing by the first contract management library, the application layer contract is set to be in a management and control state, so that the application layer contract cannot execute a subscription operation any more and cannot continue to be executed.

According to yet some other embodiments of the present disclosure, the first contract management library is configured with a contract management and control interface, so as to review and manage and control the application layer contract by the contract management and control interface.

According to the technical solutions of the embodiments of the present disclosure, by the technical solution of in response to an execution request of smart contract, calling an application layer contract to execute service logic processing, and constructing a fund contract parameter required for executing a fund layer contract; and according to the service logic and the fund contract parameter, calling the fund layer contract by the application layer contract to execute fund processing, when a smart contract needs to be executed, an application layer contract is firstly called to execute service logic processing, and then a fund layer contract is called by the application layer contract to execute fund processing, so that application logic processing and fund processing in a business scenario can be separated, and contract responsibility is clear, and logic processing is simple; in addition, by calling between smart contracts, complex contracts are implemented by combining simple contracts, and thus the present disclosure is adapted to more business application scenarios. Moreover, fund processing is performed by the fund layer contract, so that transactions of different business application scenarios can be supported, and the coverage range of a fund processing logic is enlarged; and regardless of the difference in business logics of various business application scenarios, consistent fund processing logic can be maintained.

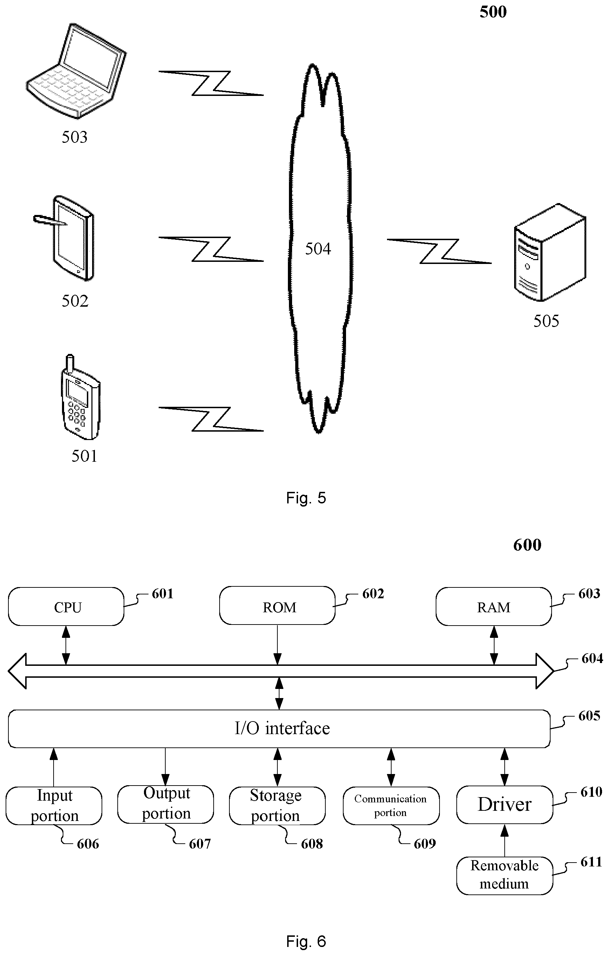

Fig. 5 illustrates an exemplary system architecture 500 to which a method for executing a smart contract or an apparatus for executing a smart contract in embodiments of the present disclosure can be applied.

As shown in Fig. 5, the system architecture 500 may comprise terminal devices 501, 502, 503, a network 504, and a server 505. The network 504 is a medium used to provide communication links between the terminal devices 501, 502, 503 and the server 505. The network 504 may comprise a variety of connection types, such as a wired, wireless communication link, or optic fiber cable, etc.

A user may use the terminal devices 501, 502, 503 to interact with the server 505 over the network 504, to receive or send messages, etc. Various client applications may be installed on the terminal devices 501, 502, and 503, for example, a banking application, a bicycle sharing application, a fitness member application, a supermarket consumer card tool, social platform software, and the like (which are merely examples).

The terminal devices 501, 502 and 503 may be various electronic devices that have a display screen and support webpage browsing, including but not limited to a smartphone, a tablet computer, a laptop portable computer, a desktop computer, and the like.

The server 505 may be a server that provides various services, such as a backend management server (merely as an example) that provides support to an execution request of smart contract sent by a user using the terminal devices 501, 502, 503. Regarding received data such as an execution request of smart contract, the backend management server may perform processing such as calling an application layer contract to execute service logic processing, and constructing fund contract parameters required for executing a fund layer contract, and calling, according to the service logic and the fund contract parameters, the fund layer contract by the application layer contract to execute fund processing; and the backend management server feeds the processing result (for example, a fund processing result and an execution result of smart contract, which are merely examples) back to the terminal devices.

It should be noted that the method for executing a smart contract provided in the embodiments of the present disclosure is generally executed by the server 505, and correspondingly, the apparatus for executing a smart contract is generally provided in the server 505.

It should be understood that the number of terminal devices, networks, and servers in Fig. 5 are merely illustrative. There may be any number of terminal devices, networks, and servers, depending on implementation requirements.

Hereinafter, refer to Fig. 6, which is a schematic structural diagram of a computer system 600 suitable for implementing a terminal device or a server of embodiments of the present disclosure. The terminal device or server shown in Fig. 6 is only an example, and should not limit the functions and use scopes of embodiments of the present disclosure.

As shown in Fig. 6, the computer system 600 comprises a central processing unit (CPU) 601 which can perform various suitable actions and processes in accordance with a program stored in a read only memory (ROM) 602 or a program loaded from a storage portion 608 into a random access memory (RAM) 603. In the RAM 603, various programs and data necessary for the operation of the system 600 are also stored. The CPU 601, the ROM 602, and the RAM 603 are connected to each other via a bus 604. An input/output (I/O) interface 605 is also connected to the bus 604.

The following components are connected to the I/O interface 605: an input portion 606 comprising a keyboard, mouse, etc.; an output portion 607 comprising, for example, a cathode ray tube (CRT), a liquid crystal display (LCD), and a loudspeaker, etc.; a storage portion 608 comprising a hard disk or the like; and a communication portion 609 comprising a network interface card such as an LAN card, a modem, and the like. The communication portion 609 performs communication processing via a network such as the Internet. A driver 610 is also connected to the I/O interface 605 as needed. A removable medium 611 such as a magnetic disk, an optical disk, a magneto-optical disk, a semiconductor memory or the like is mounted on the driver 610 as necessary, so that a computer program read therefrom is installed into the storage portion 608 as necessary.

In particular, the processes described above with reference to the flowcharts can be implemented as computer software programs in accordance with the embodiments of the present disclosure. For example, embodiments of the present disclosure comprise a computer program product comprising a computer program carried on a computer-readable medium. The computer program comprises program codes for executing the method as shown in the flowchart. In such embodiments, the computer program may be downloaded and installed from the network via the communication portion 609, and/or installed from the removable medium 611. When the computer program is executed by the central processing unit (CPU) 601, the described functions defined in the system of the present disclosure are executed.

It should be noted that the computer-readable medium as shown in the present disclosure may be a computer-readable signal medium or a computer-readable storage medium, or any combination thereof. The computer-readable storage medium may be, for example, but not limited to, an electronic, magnetic, optical, electromagnetic, infrared, or semiconductor system, apparatus, or device, or any suitable combination thereof. More specific examples of the computer-readable storage medium may comprise, but not limited to: an electrical connection having one or more conductive wires, a portable computer disk, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination thereof. In the present disclosure, the computer-readable storage medium may be any tangible medium that can contain or store a program, the program can be used by or used in connection with an instruction execution system, apparatus, or device. While in the present disclosure, the computer-readable signal medium may comprise a data signal carrying computer-readable program codes which is propagated in, for example a baseband or propagated as a part of a carrier wave. Such a propagated data signal may take a plurality of forms, comprising, but not limited to, electromagnetic signal, optical signal, or any suitable combination thereof. The computer-readable signal medium may also be any computer-readable medium other than a computer-readable storage medium, and the computer-readable storage medium can send, propagate or transmit a program for use by an instruction execution system, apparatus, or device or for use in combination therewith. Program codes included in the computer-readable medium may be transmitted via any suitable medium, including but not limited to wireless, electric wire, optical cable, RF, etc., or any suitable combination thereof.

The flowchart and block diagrams in the figures illustrate the system architecture, functionality, and operation of possible implementations of systems, methods and computer program products according to various embodiments of the present disclosure. In this regard, each block in the flowcharts or block diagrams may represent a part of a component, a program segment, or a code, and the part of a component, a program segment, or a code comprises one or more executable instructions for implementing a specified logic function. It should also be noted that in some alternative implementations, the functions labeled in the blocks may occur in sequences different from those labeled in the accompanying drawings. For example, two continuous blocks may, in fact, be executed substantially concurrently, or may sometimes be executed in an opposite order, depending on the functions involved. It will also be noted that each block in the block diagrams or flowcharts, and combinations of blocks in the block diagrams or flowcharts, can be implemented by special-purpose hardware-based systems that perform specified functions or operations, or implemented by combinations of special-purpose hardware and computer instructions.

The units or components involved in the embodiments of the present disclosure may be implemented by a software manner, and also may be implemented by a hardware manner. The units or components as described may also be provided in a processor. For example, it may be described as: a processor comprises an application contract execution component and a fund contract execution component. The names of these units or components do not constitute limitations to the units or components themselves in certain cases; for example, the application contract execution component may also be described as "a component for calling, in response to an execution request of smart contract, an application layer contract to execute service logic processing, and constructing fund contract parameters required for executing a fund layer contract".

As another aspect, the present disclosure further provides a computer-readable medium, which may be included in the device described in the embodiments above; or the computer-readable medium may exist separately and not be installed in the device. The computer-readable medium carries one or more programs, and when the one or more programs are executed by a device, the device is enabled to: call, in response to an execution request of smart contract, an application layer contract to execute service logic processing, and construct fund contract parameters required for executing a fund layer contract; and call, according to the service logic and the fund contract parameters, the fund layer contract by the application layer contract to execute fund processing.

According to the technical solutions of the embodiments of the present disclosure, by the technical solution of in response to an execution request of smart contract, calling an application layer contract to execute service logic processing, and constructing a fund contract parameter required for executing a fund layer contract; and according to the service logic and the fund contract parameter, calling the fund layer contract by the application layer contract to execute fund processing, when a smart contract needs to be executed, an application layer contract is firstly called to execute service logic processing, and then a fund layer contract is called by the application layer contract to execute fund processing, so that application logic processing and fund processing in a business scenario can be separated, and contract responsibility is clear, and logic processing is simple; in addition, by calling between smart contracts, complex contracts are implemented by combining simple contracts, and thus the present disclosure is adapted to more business application scenarios. Moreover, fund processing is performed by the fund layer contract, so that transactions of different business application scenarios can be supported, and the coverage range of a fund processing logic is enlarged; and regardless of the difference in business logics of various business application scenarios, consistent fund processing logic can be maintained.

The specific embodiments do not limit the scope of protection of the present disclosure. It will be apparent to a person skilled in the art that various modifications, combinations, sub-combinations, and replacements can be made according to design requirements and other factors. Any modifications, equivalent replacements, improvements, etc. made within the spirit and principle of the present disclosure shall belong to the scope of protection of the present disclosure.

## Claims

1. A method for executing a smart contract, comprising:
in response to an execution request of smart contract, calling an application layer contract to execute service logic processing, and constructing fund layer contract parameters required for executing a fund layer contract; and
according to the service logic and the fund layer contract parameters, calling the fund layer contract by the application layer contract to execute fund processing.

2. The method as claimed in claim 1, further comprising:
in response to that the fund layer contract relates to a fund operation, the fund operation is completed by the fund layer contract calling an interface of a digital currency system.

3. The method as claimed in claim 1, wherein
the application layer contract and the fund layer contract are stored and managed by a contract management library.

4. The method as claimed in claim 3, wherein
the contract management library comprises a first contract management library and a second contract management library,
wherein
the first contract management library is used for managing the fund layer contract, and reviewing and managing and controlling the application layer contract; and
the second contract management library is used for managing the application layer contract.

5. The method as claimed in claim 4, wherein
after the application layer contract passes reviewing by the second contract management library, the application layer contract is uploaded and registered to the first contract management library; and
after the fund layer contract passes reviewing by the first contract management library, the fund layer contract is deployed in a unified manner.

6. The method as claimed in claim 4, wherein
in response to that the application layer contract does not pass reviewing by the first contract management library, the application layer contract is set to be in a management and control state, so that the application layer contract cannot execute a subscription operation any more and cannot continue to be executed.

7. The method as claimed in claim 4, wherein
the first contract management library is configured with a contract management and control interface, so as to review and manage and control the application layer contract by the contract management and control interface.

8. An apparatus for executing a smart contract, comprising:
an application contract execution component, configured to call, in response to an execution request of smart contract, an application layer contract to execute service logic processing, and construct fund layer contract parameters required for executing a fund layer contract; and
a fund contract execution component, configured to call, according to the service logic and the fund layer contract parameters, the fund layer contract by the application layer contract to execute fund processing.

9. An electronic device for executing a smart contract, comprising:
one or more processors;
and a storage apparatus, for storing one or more programs,
wherein when the one or more programs are executed by the one or more processors, the one or more processors implement the method as claimed in any one of claims 1-7.

10. A computer-readable medium, on which a computer program is stored, wherein when the program is executed by a processor, the method as claimed in any one of claims 1-7 is implemented.
